# EUROPEAN PATENT SPECIFICATION

(11) **EP 3 390 535 B1**
(45) Date of publication and mention of the grant of the patent: **24.05.2023**
(21) Application number: 16797899.8
(22) Date of filing: 17.11.2016
(51) Int. Cl.: C08L 59/02

(54) **PROCESS FOR PRODUCTION OF POLYOXYMETHYLENE INJECTION MOULDED OBJECTS**
VERFAHREN ZUR HERSTELLUNG VON POLYOXYMETHYLENSPRITZGEGOSSENEN GEGENSTÄNDEN
PROCÉDÉ DE PRODUCTION D'OBJETS MOULÉS PAR INJECTION DE POLYOXYMÉTHYLÈNE

(30) Priority: 18.12.2015 EP 15201015
(43) Date of publication of application: 24.10.2018
(73) Proprietor: SABIC Global Technologies B.V., 4612 PX Bergen op Zoom (NL)
(72) Inventor: MITRA, Susanta, Bangalore, Karnataka 562125 (IN); NANDI, Sangita, Bangalore, Karnataka 562125 (IN); DAWOOD, Abdulsattar, Riyadh 11422 (SA)
(74) Representative: Sabic Intellectual Property Group
(86) International application number: PCT/EP2016/077952
(87) International publication number: WO 2017/102233

(56) References cited:
- WO-A1-2009/023709
- WO-A1-2015/094473
- US-A- 5 141 993

## Description

The present invention relates to a process for the production of polyoxymethylene injection moulded objects. The invention further relates to injection moulded objects produced using such process. Such injection moulded objects have a desired balance of impact properties, thermal properties and tribological properties.

Polymer compositions comprising polyoxymethylene ( also referred to as POM or polyacetal) have advantageous properties for a variety of applications, amongst which for example good stiffness, hardness, creep resistance and fatigue resistance as well as good resistance to chemicals. Furthermore, polyoxymethylenes are thermoplastics, which allows them to be moulded into the desired shapes by melt processing, such as via melt extrusion. This allows for a large variety of shapes to be obtained having uniform dimensions and properties. As a result of that, polymer compositions comprising POM are being used in a range of engineering and automotive applications where such properties are desired. Polymer compositions comprising POM may be used for the replacement of metals and thermoset materials in certain applications, allowing for amongst others a reduction of weight of the material to be used for certain applications.

For certain applications, however, the impact strength of injection moulded objects produced from polymer compositions comprising POM is not sufficient.

Various attempts have been made to improve the impact strength of POM. For example, in DE19527142, the impact strength of POM is modified by adding 10-15 wt% of polyurethane and 5-10 wt% of acrylonitrile-styrene-acrylate (ASA) copolymers, leading to at least 15 wt% of material to be added to the POM. Such high fraction of added materials negatively effects amongst others the surface properties of POM.

WO2015094473 for example describes a composition comprising polyoxymethylene and a polyacrylamide. WO2009023709 describes articles comprising polyolymethylene and polyacrylate produced by injection moulding.

For that reason, there is a need to develop a process for the production of injection moulded objects from polymer compositions comprising polyoxymethylene having an improved impact strength, whilst maintaining other properties such as mechanical properties and tribological properties at the desired level.

This has now been achieved according to the present invention by a process for the production of injection moulded objects having improved impact strength wherein the process comprises injection moulding a polymer composition at a moulding temperature of ≥ 205°C and ≤ 225°C, the polymer composition comprising a polyoxymethylene (a) and ≥ 0.5 and ≤ 5.0 % by weight of one or more (meth)acrylic polymer (b) with regard to the total weight of polyoxymethylene and (meth)acrylic polymer.

This process results in injection moulded objects having an improved impact strength, combined with desired mechanical properties including tensile modulus and tensile strength and desired tribological properties including coefficient of friction.

Injection moulding processes are very common processes by means of which articles of thermoplastic materials are shaped. Polyoxymethylenes are amongst such thermoplastic materials that may be shaped via injection moulding. A general description of suitable injection moulding processes is for example presented in 'Plastics Processing', p. 8-12, in 'Kirk-Othmer Encyclopedia of Chemical Technology', Wiley, 2003.

The processes for injection moulding of POM may for example comprise the following main steps:
- A solid feed material comprising POM, for example a composition comprising POM powder or POM granules, is fed to a processing device that converts the solid material into a molten material of a certain temperature, for example a reciprocating screw;
- The molten material having a certain moulding temperature is forced into a mould comprising a cavity in the form of the article to be shaped by applying a certain moulding pressure; the mould may be conditioned to a certain temperature to facilitate the adequate filing of the mould with the molten material into the desired shape;
- Upon completion of the mould filling, the material is allowed to solidify whilst the mould remains in a closed position;
- Upon sufficient solidification, the mould is opened upon which the shaped article may be removed.

The moulding temperature is the temperature of the molten material when forced into the mould.

It is believed that in the process of the present invention, a certain interaction between the polyoxymethylene and the (meth)acrylic polymer occurs that leads to the formation of a certain desired quantity of microvoids having a certain desired dimension in the shaped article, by which the impact strength is increased whilst maintaining the tensile modulus, the tensile strength and the coefficient of friction at the desired level.

The polymer composition used in the process according to the present invention may for example comprise ≥ 0.5 and ≤ 5.0, alternatively ≥ 1.0 and ≤ 4.5, alternatively ≥ 1.5 and ≤ 4.0, % by weight of one or more (meth)acrylic polymer (b) with regard to the total weight of polyoxymethylene and (meth)acrylic polymer.

It is particularly preferred that the polyoxymethylene (a) comprises ≥ 95.0 % by weight of polymer backbone units according to formula I: 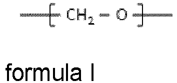 and
the one or more (meth)acrylic polymer (b) comprises a polymer comprising ≥ 95.0 % by weight of polymer backbone units according to formula II: 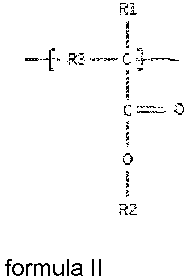 in which:
R1 is hydrogen or a hydrocarbon moiety comprising 1-4 carbon atoms;
R2 is a hydrocarbon moiety comprising 1-4 carbon atoms;
R3 is a hydrocarbon moiety comprising 1-4 carbon atoms.

It is further particularly preferred that the polyoxymethylene (a) comprises ≥ 95.0 % by weight of polymer backbone units according to formula I: 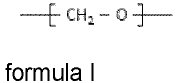 and
the one or more (meth)acrylic polymer (b) comprises a polymer comprising ≥ 95.0 % by weight of polymer backbone units according to formula II: 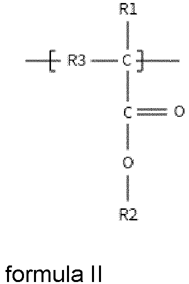 in which:
R1 is hydrogen or CH₃;
R2 is a hydrocarbon moiety comprising 1-4 carbon atoms;
R3 is a hydrocarbon moiety comprising 1-4 carbon atoms.

The polyoxymethylene (a) may be a homopolymer or a copolymer. In the process according to the present invention, the polymer composition may comprise a polyoxymethylene homopolymer, a polyoxymethylene copolymer, or combinations thereof.

Polyoxymethylene copolymers can contain one or more units derived from comonomers, such as for example acetals and cyclic ethers. This may lead to the incorporation of ether units with 2 to 12 sequential carbon atoms into the polymer chain. In case the polymer composition comprises a polyoxymethylene copolymer, the fraction of units derived from comonomers may for example be ≥ 0.1 and ≤ 20.0 wt% with regard to the total weight of the polyoxymethylene copolymer. Preferably, the fraction of units derived from comonomers is ≥ 0.1 and ≤ 10.0 wt% with regard to the total weight of the polyoxymethylene copolymer, more preferably ≥ 0.1 and ≤ 5.0 wt%, even more preferably ≥ 0.1 and ≤ 2.0 wt%. The comonomers may for example be one or more selected from ethylene oxide, butylene oxide, and 1,3-dioxolane. Preferably, the polyoxymethylene copolymer is a copolymer of 1,3,5-trioxane with 1,3-dioxolane as comonomer. The polyoxymethylene copolymer may be a random copolymer, a graft copolymer or a block copolymer. Preferably, the polyoxymethylene copolymer is a random copolymer. The copolymer can be stabilised at the chain-end, such as for example by esterification with a carboxylic acid. This carboxylic acid may for example be one selected from acetic acid, propionic acid, or butyric acid.

The polyoxymethylene can be branched or linear. The polyoxymethylene may for example have a number average molecular weight (Mₙ) of ≥ 10000 and ≤ 200000 g/mol, preferably 20000 to 90000 g/mol, as determined in accordance with ISO 16014-2 (2012). The molecular weight may be measured by gel permeation chromatography in m-cresol at 160°C using a DuPont PSM bimodal column kit with nominal pore size of 6 and 100 nm, in accordance with ASTM D5296-05. Polyoxymethylenes having such number average molecular weight present a desired melt strength for mouldability.

The polyoxymethylene may have a melt mass-flow rate of as determined in accordance with ISO 1133-1 (2011) at a temperature of 190 °C and a load of 2.16 kg of ≥ 0.10 and ≤ 100 g/10 min, preferably ≥ 0.50 and ≤ 60.0 g/10 min, more preferably ≥ 0.80 and ≤ 40.0 g/10 min.

Preferably, the one or more (meth)acrylic polymer (b) is a polymer prepared using ≥ 95.0 % by weight, more preferably ≥ 98.0 % or ≥ 99.0 % by weight, with regards to the total weight of the monomers used, of one or more monomers selected from methyl acrylate, methyl-2-methyl acrylate, methyl-2-ethyl acrylate, methyl-2-propyl-acrylate, methyl-2-butyl acrylate, ethyl acrylate, ethyl-2-methyl acrylate, ethyl-2-ethyl acrylate, ethyl-2-propyl acrylate, ethyl-2-butyl acrylate, propyl acrylate, propyl-2-methyl acrylate, propyl-2-ethyl acrylate, propyl-2-propyl acrylate, propyl-2-butyl acrylate, butyl acrylate, butyl-2-methyl acrylate, butyl-2-ethyl acrylate, butyl-2-propyl acrylate, butyl-2-butyl acrylate, t-butyl-2-methyl acrylate, isobutyl-2-methyl acrylate, isopropyl-2-methyl acrylate, or combinations thereof. More preferably, the one or more (meth)acrylic polymer (b) is a polymer prepared using ≥ 95.0 % by weight, more preferably ≥ 98.0 % or ≥ 99.0 % by weight, with regards to the total weight of the monomers used of one or more monomers selected from methyl acrylate, methyl-2-methyl acrylate, butyl-2-methyl acrylate, ethyl acrylate, or combinations thereof.

Preferably, the one or more (meth)acrylic polymer (b) is selected from polymethylmethacrylate (PMMA), polybutylmethacrylate (PBMA), poly(methylmethacrylate-ethylacrylate (PMMA-co-EA), polyethyl acrylate (PEA), polybenzyl methacrylate, poly(n-butyl acrylate), poly(t-butyl acrylate), poly(cyclohexyl methacrylate), poly(1,3-dimethylbutyl methacrylate), poly(3,3-dimethylbutyl methacrylate), poly(diphenylethyl methacrylate), poly(diphenylmethyl methacrylate), poly(dodecyl methacrylate), poly(2-ethylbutyl methacrylate), polyethyl methacrylate, poly(trimethylpropyl methacrylate), poly(n-propylmethacrylate), polyphenyl methacrylate, poly(1-phenylethyl methacrylate), polyoctyl methacrylate, polyneopentyl methacrylate, poly(1-methylpentyl methacrylate), polymethylbutyl methacrylate, polylauryl methacrylate, polyisopropyl methacrylate, polyisopentyl methacrylate, or combinations thereof. More preferably, the one or more (meth)acrylic polymer (b) is selected from polymethylmethacrylate (PMMA), polybutylmethacrylate (PBMA), poly(methylmethacrylate-ethylacrylate (PMMA-co-EA), or polyethyl acrylate (PEA). It is particularly preferred that the one or more (meth)acrylic polymer (b) is polymethylmethacrylate (PMMA).

In a preferred embodiment, the polyoxymethylene (a) is a polyoxymethylene having a number average molecular weight as determined in accordance with ISO 16014-2 (2012) of ≥ 10000 and ≤ 90000 g/mol; and/or the (meth)acrylic polymer (b) has a density of ≥ 900 kg/m³ and ≤ 1500 kg/m³, as determined in accordance with to ISO 1183-1 (2012), method A.

The polymer compositions used in the process according to the present invention can be manufactured by various methods according to general techniques which are known. The polymer compositions can generally be made by melt-blending the components using any known methods. For example, polyoxymethylene(s), (meth)acrylic polymer(s), heat stabiliser (s), antioxidant(s), and other optional components can be first blended in a high speed mixer. Other low shear processes, including but not limited to hand-mixing, can also accomplish this blending. It is preferred that the polymer composition is produced by melt mixing in a melt extruder. The mixed blend can then be fed into a melt extruder such as a twin-screw melt extruder via a hopper. Alternatively, at least one of the components can be incorporated into the composition by feeding directly into the extruder at the throat and/or downstream through a side-stuffer. Additives can also be compounded into a masterbatch containing the desired polyoxymethylene and fed into the extruder. The extrudate that exited the extruder via a die can be quenched in a water bath and pelletized. Such pellets can be used for subsequent moulding.

It is preferred that the polymer composition is produced by melt compounding a mixture of materials comprising the polyoxymethylene (a) and the (meth)acrylic polymer (b) in a melt extruder wherein the temperature of the mixture of materials in the area before the extruder die is in the range of 180-225 °C.

It is further preferred that the polymer composition comprises ≥ 90.0 and ≤ 99.5 % by weight, alternatively ≥ 95.0 and ≤ 99.0 % by weight, alternatively ≥ 96.0 and ≤ 98.5 % by weight, of polyoxymethylene (a) compared to the total weight of polyoxymethylene (a) and (meth)acrylic polymer (b).

The polymer composition may optionally comprise further ingredients such as antioxidants. These antioxidants may for example be phenolic antioxidants and/or phosphite antioxidants. A stabiliser composition comprising one or more phenolic antioxidant(s) and one or more phosphite antioxidant(s) may for example be used. Phenolic antioxidants may for example be selected from monophenolic antioxidants, i.e. antioxidants containing one phenolic group per molecule, bisphenolic antioxidants i.e. antioxidants containing two phenolic groups per molecule, and polyphenolic antioxidants, i.e. antioxidants containing more than two phenolic groups per molecule, including 1,1,3-tris(2-methyl-4-hydroxy-5-t-butyl phenyl) butane, pentaerythritol tetrakis(3-(3,5-di-t-butyl-4-hydroxyphenyl)propionate, 1,3,5-trimethyl-2,4,6-tris(3,5-di-t-butyl-4-hydroxybenzyl)benzene, 1,3,5-tris(3,5-di-t-butyl-4-hydroxybenzyl)isocyanurate, and 1,3,5-tris(4-t-butyl-2,6-dimethyl-3-hydroxybenzyl)isocyanurate. Preferably, the phenolic antioxidant is pentaerythritol tetrakis(3-(3,5-di-t-butyl-4-hydroxyphenyl)propionate.

Phosphite antioxidants may for example be selected from trisnonylphenyl phosphite, trilauryl phosphite, tris(2,4-di-t-butylphenyl)phosphite, triisodecyl phosphite, diisodecyl phenyl phosphite, diphenyl isodecyl phosphite, and triphenyl phosphite. Preferably, the phosphite antioxidant is tris(2,4-di-t-butylphenyl)phosphite.

Preferably, the stabiliser that is introduced to the melt extruder comprises pentaerythritol tetrakis(3-(3,5-di-t-butyl-4-hydroxyphenyl)propionate.

The polymer composition may for example comprise ≥ 0.10 and ≤ 1.00 wt% of antioxidant, with regard to weight of polyoxymethylene and (meth)acrylic polymer, preferably ≥ 0.20 and ≤ 0.50 wt%.

The polymer composition may optionally comprise further ingredients such as heat stabilisers. The heat stabilisers may for example be a nitrogen-containing compounds. Such nitrogen-containing heat stabilisers may for example be one or more selected from the list consisting of aminotriazine compounds, allantoin, hydrazides, polyamids, melamines, and/or mixtures thereof.

The nitrogen-containing compound can be a low molecular weight compound or a high molecular weight compound. Examples of low molecular weight nitrogen-containing compounds can include an aliphatic amine (e.g., monoethanolamine, diethanolamine, and tris-(hydroxymethyl)aminomethane), an aromatic amine (e.g., an aromatic secondary or tertiary amine such as o-toluidine, p-toluidine, p-phenylenediamine, o-aminobenzoic acid, p-aminobenzoic acid, ethyl o-aminobenzoate, or ethyl p-aminobenzoate), an imide compound (e.g., phthalimide, trimellitimide, and pyromellitimide), a triazole compound (e.g., benzotriazole), a tetrazole compound (e.g., an amine salt of 5,5'-bitetrazole, or a metal salt thereof), an amide compound (e.g., a polycarboxylic acid amide such as malonamide or isophthaldiamide, and p-aminobenzamide), hydrazine or a derivative thereof (e.g., an aliphatic carboxylic acid hydrazide such as hydrazine, hydrazone, a carboxylic acid hydrazide (stearic hydrazide, 12-hydroxystearic hydrazide, adipic dihydrazide, sebacic dihydrazide, or dodecane diacid dihydrazide; and an aromatic carboxylic acid hydrazide such as benzoic hydrazide, naphthoic hydrazide, isophthalic dihydrazide, terephthalic dihydrazide, naphthalenedicarboxylic dihydrazide, or benzenetricarboxylic trihydrazide)), a polyaminotriazine (e.g., guanamine or a derivative thereof, such as guanamine, acetoguanamine, benzoguanamine, succinoguanamine, adipoguanamine, 1,3,6-tris(3,5-diamino-2,4,6-triazinyl)hexane, phthaloguanamine or CTU-guanamine, melamine or a derivative thereof (e.g., melamine, and a condensate of melamine, such as melam, melem or melon)), a salt of a polyaminotriazine compound containing melamine and a melamine derivative with an organic acid, a salt of a polyaminotriazine compound containing melamine and a melamine derivative with an inorganic acid, uracil or a derivative thereof (e.g., uracil, and uridine), cytosine or a derivative thereof (e.g., cytosine, and cytidine), guanidine or a derivative thereof (e.g., a non-cyclic guanidine such as guanidine or cyanoguanidine; and a cyclic guanidine such as creatinine), and urea or a derivative thereof.

High molecular weight nitrogen-containing compounds can include, for example, a (co)polymer of a polyvinylamine, a (co)polymer of a polyallylamine, a condensation resin obtainable from a reaction by formaldehyde, for example, melamine resin or guanidine resin or a co-condensation resin such as a phenol-melamine resin, a benzoguanamine-melamine resin or an aromatic polyamine-melamine resin, an aromatic amine-formaldehyde resin, for example aniline resin. Polyamides can be used, including, for example, a homo- or co-polymerized polyamide such as nylon 3, nylon 4,6, nylon 6, nylon 6,6, nylon 11, nylon 12, nylon MXD6, nylon 6,10, nylon 6,11, nylon 6,12, nylon 6-6,6-6,10, or a substituted polyamide containing a methylol or alkoxymethyl group. Polyesteramides, polyamideimides, polyurethanes, poly(meth)acrylamides, copolymers of (meth)acrylamide and other vinyl-containing monomer(s), poly(vinyllactam), copolymers of vinyllactam and other vinyl-containing monomer(s), or a derivative thereof (e.g., an N-vinylformamide-N-vinylamine copolymers) (for example, trade name "PNVE Series" manufactured by Mitsubishi Chemical Corporation), copolymers of N-vinylformamide and other vinyl-containing monomer(s), poly(N-vinylcarboxylic acid amide), and copolymers of N-vinylcarboxylic acid amide and other vinyl-containing monomer(s) can also be used. The heat stabilizer can be a combination comprising at least one of any of the aforementioned nitrogen-containing compounds.

It is most preferred that the polymer composition comprises ≥ 0.10 and ≤ 1.00 wt%, alternatively 0.20 and ≤ 0.50 wt%, of pentaerythritol tetrakis(3-(3,5-di-t-butyl-4-hydroxyphenyl)propionate as antioxidant, and ≥ 0.10 and ≤ 1.00 wt%, alternatively 0.20 and ≤ 0.50 wt%, of melamine as heat stabiliser.

A further embodiment of the present invention relates to an injection moulded object produced via the process according to the invention wherein the injection moulded object has an unnotched Izod impact strength as determined according to ISO 180 (2000), condition U at 23°C of ≥ 170 kJ/m², alternatively ≥ 175 kJ/m², alternatively ≥ 180 kJ/m²,.

The invention also relates to an injection moulded object produced via the process according to the invention wherein the injection moulded object has an average coefficient of friction as determined according to ASTM D3702-94 (2014) of ≤ 0.40, alternatively ≤ 0.38.

In a further even more preferred embodiment, the invention relates to a process for the production of injection moulded objects having improved impact strength wherein the process comprises injection moulding a polymer composition at a moulding temperature of ≥ 205°C and ≤ 225°C, the polymer composition comprising
(a) ≥ 96.0 and ≤ 98.5 % by weight of a polyoxymethylene having a number average molecular weight as determined in accordance with ISO 16014-2 (2012) of ≥ 10000 and ≤ 90000 g/mol; and
(b) ≥ 1.5 and ≤ 4.0 % by weight of one or more (meth)acrylic polymer selected from polymethylmethacrylate (PMMA), polybutylmethacrylate (PBMA), poly(methylmethacrylate-ethylacrylate (PMMA-co-EA), polyethyl acrylate (PEA);

with regard to the total weight of polyoxymethylene and (meth)acrylic polymer, the total of (a) and (b) adding up to 100%;
wherein the injection moulded object has an unnotched Izod impact strength as determined according to ISO 180 (2000), condition U at 23°C of ≥ 170 kJ/m²; and
wherein the injection moulded object has an average coefficient of friction as determined according to ASTM D3702-94 (2014) of ≤ 0.40.

The process of the present invention is particularly suitable for the production of injection moulded articles in which high impact strength is required without compromising tensile modulus and frictional properties. For example, such articles include automotive parts, precision machine parts, building materials, piping parts and parts for medical devices. Such machine parts may for example be parts for textile machinery, such as spinning spindles.

The invention will now be illustrated by the following non-limiting examples.

**Table I - Materials used**

| | |
|---|---|
| POM | Polyoxymethylene of grade Hostaform C9021, obtainable from Ticona, having CAS registry nr. 50-00-0 |
| PMMA | PMMA (meth)acrylic polymer of grade EG920, obtainable from LG Chemical, having CAS registry nr. 9011-14-7 |
| PBMA | PBMA (meth)acrylic polymer having CAS registry nr. 9003-63-8, obtainable from Sigma Aldrich |
| P(MMA-co-EA) | P(MMA-co-EA) (meth)acrylic polymer having CAS registry nr. 9010-88-2, obtainable from Sigma Aldrich |
| Antioxidant | Irganox 1010 having CAS registry nr. 6683-19-8, obtainable from BASF |
| Heat stabiliser | Melamine having CAS registry nr. 108-78-1, obtainable from Alfa Aesar |

### A. Preparation of polymer compositions

Compounding was performed in a Werner & Pfleiderer ZSK2 co-rotating twin-screw extruder having a screw diameter of 25 mm and a length : diameter ratio (UD ratio) of 40. The extruder was operated using temperature profile of increasing set temperatures along the screw length such that homogeneous mixing occurred. For each example, the set temperature in the extruder die area is presented in table II. The extruder was operated at a screw speed of 300 rpm, with a feed rate of 8 kg/h, allowing for an average residence time of 42 s. All ingredients to be compounded were added in the main feeder of the extruder to ensure homogeneous mixing. The material exiting the compounding extruder die was cooled to solidify and cut to obtain pellets of the compounded formulation having a length, width and height in the range of 3 mm to 5 mm.

### B. injection moulding of compounded formulations

The compounded formulations obtained in step A were subjected to injection moulding using an L&T ASWA 100T injection moulding machine to obtain injection moulded specimens for determination of material properties.

For determination of the unnotched Izod impact strength, specimens of 80mm × 10 mm × 4 mm according to ISO 180 (2000) were prepared.

For determination of the tensile modulus and tensile strength, dumbbell-shaped specimens of type 1A according to ISO 527 (2012) were prepared.

For determination of the coefficient of friction, specimens according to ASTM D3702-94 (2014) were prepared.

The temperature at which the compounded formulations were injected into the mould was varied as presented in table II. Injection pressure was 90 bar, the holding pressure 70 bar and the back pressure 5 bar. The temperature of the mould was maintained at 70°C.

**Table II - Compound formulations, compounding conditions and moulding conditions**

| Example | I | II | III | IV | V | VI | VII | VIII | IX | X | XI |
|---|---|---|---|---|---|---|---|---|---|---|---|
| Feed composition (% by weight) | | | | | | | | | | | |
| POM | 97.5 | 96.5 | 95.5 | 94.5 | 96.5 | 96.5 | 96.5 | 96.5 | 96.5 | 96.5 | 96.5 |
| PMMA | 2.0 | 3.0 | 4.0 | 5.0 | | | 3.0 | 3.0 | 3.0 | 3.0 | 3.0 |
| PBMA | | | | | 3.0 | | | | | | |
| P(MMA-co-EA) | | | | | | 3.0 | | | | | |
| Antioxidant | 0.25 | 0.25 | 0.25 | 0.25 | 0.25 | 0.25 | 0.25 | 0.25 | 0.25 | 0.25 | 0.25 |
| Heat stabiliser | 0.25 | 0.25 | 0.25 | 0.25 | 0.25 | 0.25 | 0.25 | 0.25 | 0.25 | 0.25 | 0.25 |

| Processing properties | | | | | | | | | | | |
|---|---|---|---|---|---|---|---|---|---|---|---|
| T_{die} | 210 | 210 | 210 | 210 | 210 | 210 | 190 | 190 | 200 | 200 | 210 |
| T_{mould} | 210 | 210 | 210 | 210 | 210 | 210 | 210 | 220 | 210 | 220 | 220 |

**Table II - continued**

| Example | XII | XIII | XIV | XV | XVI |
|---|---|---|---|---|---|
| Feed composition (% by weight) | | | | | |
| POM | 99.5 | 89.5 | 96.5 | 96.5 | 96.5 |
| PMMA | | 10.0 | 3.0 | 3.0 | 3.0 |
| PBMA | | | | | |
| P(MMA-co-EA) | | | | | |
| Antioxidant | 0.25 | 0.25 | 0.25 | 0.25 | 0.25 |
| Heat stabiliser | 0.25 | 0.25 | 0.25 | 0.25 | 0.25 |

| Processing properties | | | | | |
|---|---|---|---|---|---|
| T_{die} | 210 | 210 | 190 | 210 | 220 |
| T_{mould} | 210 | 210 | 200 | 230 | 230 |

The ingredients of the feed composition in table II are presented as parts by weight with regard to the total weight of the feed composition.

T_{die} is the set temperature of the compounding extruder in the area before the die of the extruder, in °C.

T_{mould} is the set temperature of the injection moulding machine in the area of the die of the injection moulding machine, in °C.

Examples I-XI present examples according to the present invention. Examples XII-XVI present examples for comparative purposes.

### C. Determination of material properties

Of the obtained injection moulded specimens from B, material properties were determined as presented in table III.

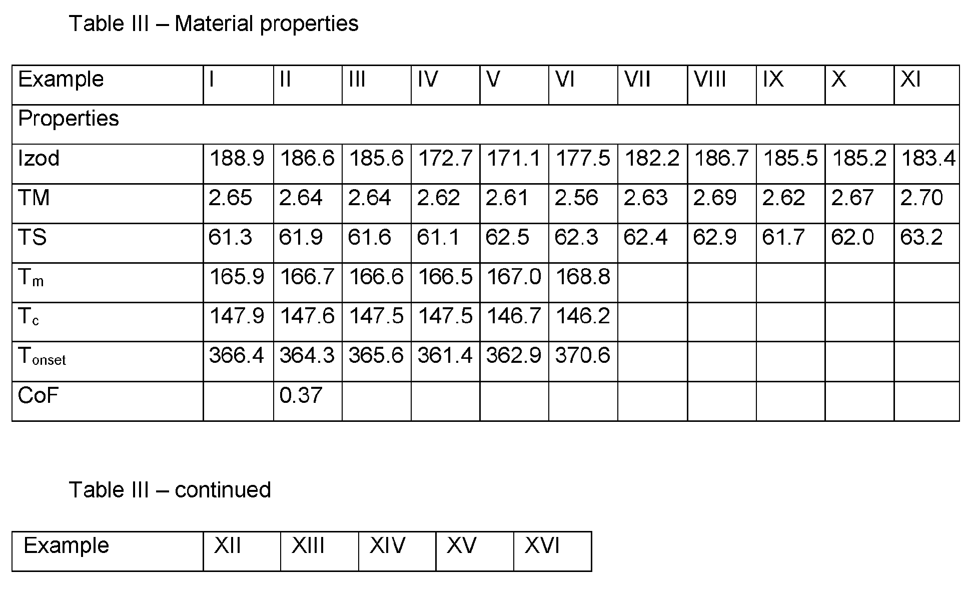

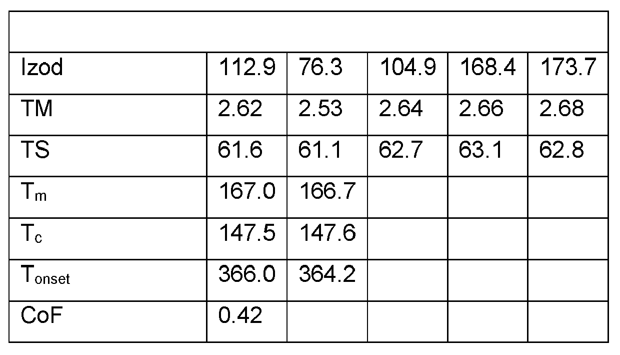

In which:
Izod is the unnotched Izod impact strength in kJ/m² determined in accordance with ISO 180 (2000), condition U at 23°C using a Zwick HIT 25P impact tester with an 11J hammer.
TM is the tensile modulus in GPa as determined in accordance with ISO 527 (2012) using a Zwick Z010 Universal Testing Machine.
TS is the tensile strength in MPa as determined in accordance with ISO 527 (2012) using a Zwick Z010 Universal Testing Machine.
Tₘ is the melting temperature in °C as determined as the second melting temperature in DSC analysis performed according ASTM D3418-12 using a Perkin Elmer Diamond DSC.
T_{c} is the crystallisation peak temperature as determined according to ASTM D3418-12 using a Perkin Elmer Diamond DSC.
Tₒₙₛₑₜ is the onset degradation temperature as determined according to ASTM E1131-08 (2014). The onset degradation temperature indicates the temperature at which the thermal degradation of the polymeric material starts.
CoF is the average dynamic coefficient of friction (dimensionless) as determined according to ASTM D3702-94 (2014) using a Lewis LRI-1a tribometer.

By comparing examples I - IV with XII, it becomes apparent that injection moulded objects produced according to the invention comprising a polyoxymethylene (a) and ≥ 0.5 and ≤ 5.0 % by weight of one or more (meth)acrylic polymer (b) have an increased impact strength as compared to injection moulded objects produced from polyoxymethylene compositions not comprising such quantity of (meth)acrylic polymer.

By comparing examples I - IV with XIII it becomes apparent that injection moulded objects produced according to the invention comprising a polyoxymethylene (a) and ≥ 0.5 and ≤ 5.0 % by weight of one or more (meth)acrylic polymer (b) have an increased impact strength as compared to injection moulded objects produced from polyoxymethylene compositions comprising a higher quantity of (meth)acrylic polymer.

By comparing examples VII-XI with XIV, it becomes apparent that injection moulded objects produced according to the invention comprising a polyoxymethylene (a) and ≥ 0.5 and ≤ 5.0 % by weight of one or more (meth)acrylic polymer (b) at a moulding temperature of ≥ 205°C and ≤ 225°C have an increased impact strength as compared to injection moulded objects produced from such compositions at a lower moulding temperature.

By comparing examples II with XII, it becomes apparent that injection moulded objects produced according to the invention have a reduced coefficient of friction.

The examples furthermore demonstrate that the process according to the invention allows to maintain similarly desirable values for the properties tensile strength, tensile modulus, melting temperature, crystallisation peak temperature, and onset degradation temperature.

## Claims

1. Process for the production of injection moulded objects having improved impact strength wherein the process comprises injection moulding a polymer composition at a moulding temperature of ≥ 205°C and ≤ 225°C, the polymer composition comprising
(a) ≥ 95.0 and ≤ 99.5 % by weight of a polyoxymethylene; and
(b) ≥ 0.5 and ≤ 5.0 % by weight of one or more (meth)acrylic polymer with regard to the total weight of polyoxymethylene and (meth)acrylic polymer.

2. Process according to claim 1 wherein the polymer composition comprises ≥ 1.0 and ≤ 4.5 % by weight of one or more (meth)acrylic polymer (b) with regard to the total weight of polyoxymethylene and (meth)acrylic polymer.

3. Process according to any one of claims 1-2 wherein :
the polyoxymethylene (a) comprises ≥ 95.0 % by weight, with regard to the total weight of the polyoxymethylene (a), of polymer backbone units according to formula I: 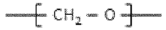 and
the (meth)acrylic polymer (b) comprises ≥ 95.0 % by weight, with regard to the total weight of
the (meth)acrylic polymer (b), of polymer backbone units according to formula II: 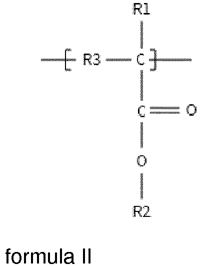 in which:
R1 is hydrogen or CH₃;
R2 is a hydrocarbon moiety comprising 1-4 carbon atoms;
R3 is a hydrocarbon moiety comprising 1 carbon atom.

4. Process according to any one of claims 1-3 wherein the polyoxymethylene (a) is a homopolymer or a copolymer.

5. Process according to any one of claims 1-2 wherein one or more (meth)acrylic polymer (b) is a polymer prepared using ≥ 95% by weight with regard to the total weight of the monomers used of one or more monomers selected from methyl acrylate, methyl-2-methyl acrylate, methyl-2-ethyl acrylate, methyl-2-propyl-acrylate, methyl-2-butyl acrylate, ethyl acrylate, ethyl-2-methyl acrylate, ethyl-2-ethyl acrylate, ethyl-2-propyl acrylate, ethyl-2-butyl acrylate, propyl acrylate, propyl-2-methyl acrylate, propyl-2-ethyl acrylate, propyl-2-propyl acrylate, propyl-2-butyl acrylate, butyl acrylate, butyl-2-methyl acrylate, butyl-2-ethyl acrylate, butyl-2-propyl acrylate, butyl-2-butyl acrylate, t-butyl-2-methyl acrylate, isobutyl-2-methyl acrylate, isopropyl-2-methyl acrylate, or combinations thereof.

6. Process according to any one of claims 1-2 wherein one or more (meth)acrylic polymer (b) is selected from polymethylmethacrylate (PMMA), polybutylmethacrylate (PBMA), poly(methylmethacrylate-ethylacrylate (PMMA-co-EA), polyethyl acrylate (PEA), polybenzyl methacrylate, poly(n-butyl acrylate), poly(t-butyl acrylate), poly(cyclohexyl methacrylate), poly(1,3-dimethylbutyl methacrylate), poly(3,3-dimethylbutyl methacrylate), poly(diphenylethyl methacrylate), poly(diphenylmethyl methacrylate), poly(dodecyl methacrylate), poly(2-ethylbutyl methacrylate), polyethyl methacrylate, poly(trimethylpropyl methacrylate), poly(n-propylmethacrylate), polyphenyl methacrylate, poly(1-phenylethyl methacrylate), polyoctyl methacrylate, polyneopentyl methacrylate, poly(1-methylpentyl methacrylate), polymethylbutyl methacrylate, polylauryl methacrylate, polyisopropyl methacrylate, polyisopentyl methacrylate, or combinations thereof.

7. Process according to any one of claims 1-6 wherein one or more (meth)acrylic polymer (b) is selected from polymethylmethacrylate (PMMA), polybutylmethacrylate (PBMA), poly(methylmethacrylate-ethylacrylate (PMMA-co-EA), or polyethyl acrylate (PEA).

8. Process according to any one of claims 1-7 wherein the polymer composition is produced by melt compounding a mixture of materials comprising the polyoxymethylene (a) and the (meth)acrylic polymer (b) in a melt extruder wherein the temperature of the mixture of materials in the area before the extruder die is in the range of 180-225 °C.

9. Process according to any one of claims 1-8 wherein:
the polyoxymethylene (a) is a polyoxymethylene having a number average molecular weight as determined in accordance with ISO 16014-2 (2012) of ≥ 10000 and ≤ 90000 g/mol; and/or
the (meth)acrylic polymer (b) has a density of ≥ 900 kg/m³ and ≤ 1500 kg/m³, as determined in accordance with to ISO 1183-1 (2012), method A.

10. Process according to any one of claims 1-9 wherein the polymer composition comprises ≥ 90.0 and ≤ 99.5 % by weight of polyoxymethylene (a) with regard to the total weight of the polymer composition.

11. Process according to any one of claims 1-10 wherein the polymer composition is produced by melt mixing in a melt extruder.

12. Process for the production of injection moulded objects having improved impact strength according to any one of claims 1-11 wherein the process comprises injection moulding a polymer composition at a moulding temperature of ≥ 205°C and ≤ 225°C, the polymer composition comprising
(a) ≥ 96.0 and ≤ 98.5 % by weight of a polyoxymethylene having a number average molecular weight as determined in accordance with ISO 16014-2 (2012) of ≥ 10000 and ≤ 90000 g/mol; and
(b) ≥ 1.5 and ≤ 4.0 % by weight of one or more (meth)acrylic polymer selected from polymethylmethacrylate (PMMA), polybutylmethacrylate (PBMA), poly(methylmethacrylate-ethylacrylate (PMMA-co-EA), polyethyl acrylate (PEA);
with regard to the total weight of polyoxymethylene and (meth)acrylic polymer, the total of (a) and (b) adding up to 100%;
wherein the injection moulded object has an unnotched Izod impact strength as determined according to ISO 180 (2000), condition U at 23°C of ≥ 170 kJ/m²; and
wherein the injection moulded object has an average coefficient of friction as determined according to ASTM D3702-94 (2014) of ≤ 0.40.

13. Injection moulded object produced via the process according to any one of claims 1-11 wherein the injection moulded object has an unnotched Izod impact strength as determined according to ISO 180 (2000), condition U at 23°C of ≥ 170 kJ/m².

14. Injection moulded object according to claim 13 or produced via the process according to any one of claims 1-12 wherein the injection moulded object has an average coefficient of friction as determined according to ASTM D3702-94 (2014) of ≤ 0.40.

## Patentansprüche

1. Prozess zur Herstellung von spritzgegossenen Objekten mit verbesserter Schlagzähigkeit, wobei der Prozess das Spritzgießen einer Polymerzusammensetzung bei einer Formtemperatur von ≥ 205 °C und ≤ 225 °C umfasst, wobei die Polymerzusammensetzung Folgendes umfasst
(a) ≥ 95,0 und ≤ 99,5 Gew.-% eines Polyoxymethylens; und
(b) ≥ 0,5 und ≤ 5,0 Gew.-% von einem oder mehreren (Meth)acrylpolymer in Bezug auf das Gesamtgewicht von Polyoxymethylen und (Meth)acrylpolymer.

2. Prozess nach Anspruch 1, wobei die Polymerzusammensetzung ≥ 1,0 und ≤ 4,5 Gew.-% von einem oder mehreren (Meth)acrylpolymer (b) in Bezug auf das Gesamtgewicht von Polyoxymethylen und (Meth)acrylpolymer umfasst.

3. Prozess nach einem der Ansprüche 1-2, wobei:
das Polyoxymethylen (a) ≥ 95,0 Gew.-%, in Bezug auf das Gesamtgewicht des Polyoxymethylens (a), von Polymerrückgrateinheiten gemäß Formel I umfasst: 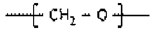 und
das (Meth)acrylpolymer (b) ≥ 95,0 Gew.-%, in Bezug auf das Gesamtgewicht des (Meth)acrylpolymers (b), von Polymerrückgrateinheiten gemäß Formel II umfasst: 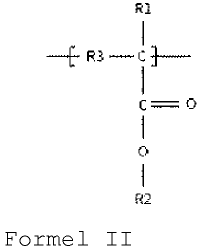 wobei:
R1 Wasserstoff oder CH₃ ist;
R2 ein Kohlenwasserstoffteil ist, der 1-4 Kohlenstoffatome umfasst;
R3 ein Kohlenwasserstoffteil ist, der 1 Kohlenstoffatom umfasst.

4. Prozess nach einem der Ansprüche 1-3, wobei das Polyoxymethylen (a) ein Homopolymer oder ein Copolymer ist.

5. Prozess nach einem der Ansprüche 1-2, wobei ein oder mehrere (Meth)acrylpolymer (b) ein Polymer ist, das hergestellt wird unter Verwendung von ≥ 95 Gew.-% in Bezug auf das Gesamtgewicht des verwendeten Monomers aus einem oder mehreren Monomeren, ausgewählt aus Methylacrylat, Methyl-2-methylacrylat, Methyl-2-ethylacrylat, Methyl-2-propylacrylat, Methyl-2-butylacrylat, Ethylacrylat, Ethyl-2-methylacrylat, Ethyl-2-ethylacrylat, Ethyl-2-propylacrylat, Ethyl-2-butylacrylat, Propylacrylat, Propyl-2-methylacrylat, Propyl-2-ethylacrylat, Propyl-2-propylacrylat, Propyl-2-butylacrylat, Butylacrylat, Butyl-2-methylacrylat, Butyl-2-ethylacrylat, Butyl-2-propylacrylat, Butyl-2-butylacrylat, t-Butyl-2-methylacrylat, Isobutyl-2-methylacrylat, Isopropyl-2-methylacrylat oder Kombinationen davon.

6. Prozess nach einem der Ansprüche 1-2, wobei ein oder mehrere (Meth)acrylpolymer (b) ausgewählt ist aus Polymethylmethacrylat (PMMA), Polybutylmethacrylat (PBMA), Poly(methylmethacrylat-ethylacrylat (PMMA-co-EA), Polyethylacrylat (PEA), Polybenzylmethacrylat, Poly(n-butylacrylat), Poly(t-butylacrylat), Poly(cyclohexylmethacrylat), Poly(1,3-dimethylbutylmethacrylat), Poly(3,3-dimethylbutylmethacrylat), Poly(diphenylethylmethacrylat), Poly(diphenylmethylmethacrylat), Poly(dodecylmethacrylat), Poly(2-ethylbutylmethacrylat), Polyethylmethacrylat, Poly(trimethylpropylmethacrylat), Poly(n-propylmethacrylat), Polyphenylmethacrylat, Poly(1-phenylethylmethacrylat), Polyoctylmethacrylat, Polyneopentylmethacrylat, Poly(1-methylpentylmethacrylat), Polymethylbutylmethacrylat, Polylaurylmethacrylat, Polyisopropylmethacrylat, Polyisopentylmethacrylat oder Kombinationen davon.

7. Prozess nach einem der Ansprüche 1-6, wobei ein oder mehrere (Meth)acrylpolymer (b) ausgewählt ist aus Polymethylmethacrylat (PMMA), Polybutylmethacrylat (PBMA), Poly(methylmethacrylat-ethylacrylat (PMMA-co-EA) oder Polyethylacrylat (PEA).

8. Prozess nach einem der Ansprüche 1-7, wobei die Polymerzusammensetzung hergestellt wird durch Schmelzcompoundierung eines Gemischs aus Materialien, umfassend das Polyoxymethylen (a) und das (Meth)acrylpolymer (b), in einem Schmelzextruder, wobei die Temperatur des Gemischs aus Materialien im Bereich vor der Extruderdüse im Bereich von 180-225 °C ist.

9. Prozess nach einem der Ansprüche 1-8, wobei:
das Polyoxymethylen (a) ein Polyoxymethylen mit einem zahlenmittleren Molekulargewicht, bestimmt gemäß ISO 16014-2 (2012), von ≥ 10000 und ≤ 90000 g/mol ist; und/oder das (Meth)acrylpolymer (b) eine Dichte von ≥ 900 kg/m³ und ≤ 1500 kg/m³, bestimmt gemäß ISO 1183-1 (2012), Verfahren A, hat.

10. Prozess nach einem der Ansprüche 1-9, wobei die Polymerzusammensetzung ≥ 90,0 und ≤ 99,5 Gew.-% Polyoxymethylen (a) in Bezug auf das Gesamtgewicht der Polymerzusammensetzung umfasst.

11. Prozess nach einem der Ansprüche 1-10, wobei die Polymerzusammensetzung durch Schmelzmischen in einem Schmelzextruder hergestellt wird.

12. Prozess zur Herstellung von spritzgegossenen Objekten mit verbesserter Schlagfestigkeit nach einem der Ansprüche 1-11, wobei der Prozess das Spritzgießen einer Polymerzusammensetzung bei einer Formtemperatur von ≥ 205 °C und ≤ 225 °C umfasst, wobei die Polymerzusammensetzung Folgendes umfasst
(a)≥ 96,0 und ≤ 98,5 Gew.-% eines Polyoxymethylens mit einem zahlenmittleren Molekulargewicht, bestimmt gemäß ISO 16014-2 (2012), von ≥ 10000 und ≤ 90000 g/mol; und
b) ≥ 1,5 und ≤ 4,0 Gew.-% von einem oder mehreren (Meth)acrylpolymer, ausgewählt aus Polymethylmethacrylat (PMMA), Polybutylmethacrylat (PBMA), Poly(methylmethacrylat-ethylacrylat (PMMA-co-EA), Polyethylacrylat (PEA);
in Bezug auf das Gesamtgewicht von Polyoxymethylen und (Meth)acrylpolymer, wobei sich die Summe aus (a) und (b) auf 100 % summiert;
wobei das spritzgegossene Objekt eine ungekerbte Izod-Schlagzähigkeit, bestimmt gemäß ISO 180 (2000), Bedingung U bei 23 °C, von ≥ 170 kJ/m² hat; und
wobei das spritzgegossene Objekt einen mittleren Reibungskoeffizienten, bestimmt gemäß ASTM D3702-94 (2014), von ≤ 0,40 hat.

13. Spritzgegossenes Objekt, hergestellt über den Prozess nach einem der Ansprüche 1-11, wobei das spritzgegossene Objekt eine ungekerbte Izod-Schlagzähigkeit, bestimmt gemäß ISO 180 (2000), Bedingung U bei 23 °C, von ≥ 170 kJ/m² hat.

14. Spritzgegossenes Objekt nach Anspruch 13 oder hergestellt über den Prozess nach einem der Ansprüche 1-12, wobei das spritzgegossene Objekt einen mittleren Reibungskoeffizienten, bestimmt gemäß ASTM D3702-94 (2014), von ≤ 0,40 hat.

## Revendications

1. Procédé pour la production d'objets moulés par injection ayant une résistance aux chocs améliorée dans lequel le procédé comprend le moulage par injection d'une composition de polymère à une température de moulage ≥ 205 °C et ≤ 225 °C, la composition de polymère comprenant
(a) ≥ 95,0 et ≤ 99,5 % en poids d'un polyoxyméthylène ; et
(b) ≥ 0,5 et ≤ 5,0 % en poids d'un ou de plusieurs polymères (méth)acryliques par rapport au poids total de polyoxyméthylène et de polymère (méth)acrylique.

2. Procédé selon la revendication 1 dans lequel la composition de polymère comprend ≥ 1,0 et ≤ 4,5 % en poids d'un ou de plusieurs polymères (méth)acryliques (b) par rapport au poids total de polyoxyméthylène et de polymère (méth)acrylique.

3. Procédé selon l'une quelconque des revendications 1 et 2 dans lequel :
le polyoxyméthylène (a) comprend ≥ 95,0 % en poids, par rapport au poids total du polyoxyméthylène (a), de motifs de squelette de polymère selon la formule I : 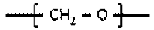 et
le polymère (méth)acrylique (b) comprend ≥ 95,0 % en poids, par rapport au poids total du polymère (méth)acrylique (b), de motifs de squelette de polymère selon la formule II : 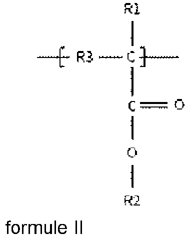 dans laquelle :
R1 est hydrogène ou CH₃ ;
R2 est une fraction hydrocarbonée comprenant 1 à 4 atomes de carbone ;
R3 est une fraction hydrocarbonée comprenant 1 atome de carbone.

4. Procédé selon l'une quelconque des revendications 1 à 3 dans lequel le polyoxyméthylène (a) est un homopolymère ou un copolymère.

5. Procédé selon l'une quelconque des revendications 1 et 2 dans lequel un ou plusieurs polymères (méth)acryliques (b) sont des polymères préparés à l'aide de ≥ 95 % en poids par rapport au poids total des monomères utilisés d'un ou de plusieurs monomères choisis parmi l'acrylate de méthyle, l'acrylate de méthyl-2-méthyle, l'acrylate de méthyl-2-éthyle, l'acrylate de méthyl-2-propyle, l'acrylate, de méthyl-2-butyle, l'acrylate d'éthyle, l'acrylate d'éthyl-2-méthyle, l'acrylate d'éthyl-2-éthyle, l'acrylate d'éthyl-2-propyle, l'acrylate d'éthyl-2-butyle, l'acrylate de propyle, l'acrylate de propyl-2-méthyle, l'acrylate de propyl-2-éthyle, l'acrylate de propyl-2-propyle, l'acrylate de propyl-2-butyle, l'acrylate de butyle, l'acrylate de butyl-2-méthyle, l'acrylate de butyl-2-éthyle, l'acrylate de butyl-2-propyle, l'acrylate de butyl-2-butyle, l'acrylate de t-butyl-2-méthyle, l'acrylate d'isobutyl-2-méthyle, l'acrylate d'isopropyl-2-méthyle, ou des combinaisons de ceux-ci.

6. Procédé selon l'une quelconque des revendications 1 et 2 dans lequel un ou plusieurs polymères (méth)acryliques (b) sont choisis parmi le polyméthacrylate de méthyle (PMMA), le polyméthacrylate de butyle (PBMA), le poly(méthacrylate de méthyl-acrylate d'éthyle) (PMMA-co-EA), le polyacrylate d'éthyle (PEA), le polyméthacrylate de benzyle, le poly(acrylate de n-butyle), le poly(acrylate de t-butyle), le poly(méthacrylate de cyclohexyle), le poly(méthacrylate de 1,3-diméthylbutyle), le poly(méthacrylate de 3,3-diméthylbutyle), le poly(méthacrylate de diphényléthyle), le poly(méthacrylate de diphénylméthyle), le poly(méthacrylate de dodécyle), le poly(méthacrylate de 2-éthylbutyle), le polyméthacrylate d'éthyle, le poly(méthacrylate de triméthylpropyle), le poly(méthacrylate de n-propyle), le polyméthacrylate de phényle, le poly(méthacrylate de 1-phényléthyle), le polyméthacrylate d'octyle, le polyméthacrylate de néopentyle, le poly(méthacrylate de 1-méthylpentyle), le polyméthacrylate de méthylbutyle, le polyméthacrylate de lauryle, le polyméthacrylate d'isopropyle, le polyméthacrylate d'isopentyle, ou des combinaisons de ceux-ci.

7. Procédé selon l'une quelconque des revendications 1 à 6 dans lequel un ou plusieurs polymères (méth)acryliques (b) sont choisis parmi le polyméthacrylate de méthyle (PMMA), le polyméthacrylate de butyle (PBMA), le poly(méthacrylate de méthyl-acrylate d'éthyle) (PMMA-co-EA), ou le polyacrylate d'éthyle (PEA).

8. Procédé selon l'une quelconque des revendications 1 à 7 dans lequel la composition de polymère est produite par compoundage à l'état fondu d'un mélange de matières comprenant le polyoxyméthylène (a) et le polymère (méth)acrylique (b) dans une extrudeuse à l'état fondu dans lequel la température du mélange de matières dans la zone précédant la filière d'extrusion est dans la plage de 180 à 225 °C.

9. Procédé selon l'une quelconque des revendications 1 à 8 dans lequel :
le polyoxyméthylène (a) est un polyoxyméthylène ayant un poids moléculaire moyen en nombre tel que déterminé conformément à la norme ISO 16014-2 (2012) de ≥ 10 000 et ≤ 90 000 g/mol ; et/ou le polymère (méth)acrylique (b) a une masse volumique de ≥ 900 kg/m³ et ≤ 1500 kg/m³, telle que déterminée conformément à la norme ISO 1183-1 (2012), méthode A.

10. Procédé selon l'une quelconque des revendications 1 à 9 dans lequel la composition de polymère comprend ≥ 90,0 et ≤ 99,5 % en poids de polyoxyméthylène (a) par rapport au poids total de la composition de polymère.

11. Procédé selon l'une quelconque des revendications 1 à 10 dans lequel la composition de polymère est produite par mélange à l'état fondu dans une extrudeuse à l'état fondu.

12. Procédé pour la production d'objets moulés par injection ayant une résistance aux chocs améliorée selon l'une quelconque des revendications 1 à 11 dans lequel le procédé comprend le moulage par injection d'une composition de polymère à une température de moulage de ≥ 205 °C et ≤ 225 °C, la composition de polymère comprenant
(a) ≥ 96,0 et ≤ 98,5 % en poids d'un polyoxyméthylène ayant un poids moléculaire moyen en nombre tel que déterminé conformément à la norme ISO 16014-2 (2012) de ≥ 10 000 et ≤ 90 000 g/mol ; et
(b) ≥ 1,5 et ≤ 4,0 % en poids d'un ou de plusieurs polymères (méth)acryliques choisis parmi le polyméthacrylate de méthyle (PMMA), le polyméthacrylate de butyle (PBMA), le poly(méthacrylate de méthyl-acrylate d'éthyle) (PMMA-co-EA), le polyacrylate d'éthyle (PEA) ;
par rapport au poids total de polyoxyméthylène et de polymère (méth)acrylique, le total de (a) et (b) atteignant 100 % ;
dans lequel l'objet moulé par injection a une résistance aux chocs Izod sur éprouvette non entaillée telle que déterminée selon la norme ISO 180 (2000), condition U à 23 °C de ≥ 170 kJ/m² ; et
dans lequel l'objet moulé par injection a un coefficient de frottement moyen tel que déterminé selon la norme ASTM D3702-94 (2014) de ≤ 0,40.

13. Objet moulé par injection produit par le biais du procédé selon l'une quelconque des revendications 1 à 11 dans lequel l'objet moulé par injection a une résistance aux chocs Izod sur éprouvette non entaillée telle que déterminée selon la norme ISO 180 (2000), condition U à 23 °C de ≥ 170 kJ/m².

14. Objet moulé par injection selon la revendication 13 ou produit par le biais du procédé selon l'une quelconque des revendications 1 à 12 dans lequel l'objet moulé par injection a un coefficient de frottement moyen tel que déterminé selon la norme ASTM D3702-94 (2014) de ≤ 0,40.
